# EUROPEAN PATENT APPLICATION

(11) **EP 4 819 479 A1**
(43) Date of publication of application: **07.10.2026**
(21) Application number: 25167443.8
(22) Date of filing: 31.03.2025
(51) Int. Cl.: H02P 6/185, H02P 6/20, H02P 23/14, B25F 5/00

(54) **METHOD FOR DETERMINING A ROTOR POSITION FOR A ROTOR OF AN EC MOTOR FOR A POWER TOOL, DATA PROCESSING APPARATUS, COMPUTER PROGRAM, COMPUTER-READABLE STORAGE MEDIUM, MOTOR ASSEMBLY, SENSORLESS EC MOTOR, AND POWER TOOL**

(71) Applicant: Festool GmbH, 73240 Wendlingen am Neckar (DE)
(72) Inventor: HOFMANN, Tobias, 73240 Wendlingen (DE); MORGENSTERN, Norbert, 73240 Wendlingen (DE); SCHÄFER, Tom, 73240 Wendlingen (DE)
(74) Representative: Maiwald GmbH

(57) **Abstract**

A method for determining a rotor position for a rotor (26) of an EC motor (18) for a power tool is described. The EC motor (18) comprises a plurality of stator phases (X, Y, Z). Each stator phase (X, Y, Z) comprises a stator phase winding (25a, 25b, 25c) wound around associated stator teeth and forming a pair of stator poles. The method comprises causing consecutive application of a voltage (V) to at least two stator phase windings (25a, 25b, 25c) such that the applied voltage (V) causes a current (I) in the associated stator phase windings (25a, 25b, 25c). Moreover, the method comprises obtaining data (D) indicative of a gradient of the caused current (I) for each stator phase winding. Furthermore, the method comprises determining the stator phase winding (25a, 25b, 25c) associated with the smallest gradient, and determining the rotor position based on the determined stator phase winding (25a, 25b, 25c) associated with the smallest gradient. Additionally, a data processing apparatus (20), a computer program (36), and a computer-readable storage medium (34) are presented. Moreover, a motor assembly (12) is described which comprises a sensorless EC motor (18) and a data processing apparatus (20). Also, a sensorless EC motor (18) and a power tool are explained.

## Description

The invention relates to a method for determining a rotor position for a rotor of an EC motor for a power tool. The EC motor comprises a plurality of stator phases. Each stator phase comprises a stator phase winding wound around associated stator teeth and forming a pair of stator poles.

The invention is further directed to a data processing apparatus, a computer program, and a computer-readable storage medium.

Additionally, the invention relates to a motor assembly, a sensorless EC motor for such a motor assembly, and a power tool.

EC motors or EC machines are used for a great variety of different applications. In this context, EC stands for electronically commutated. This means that the electric machine or the electric motor does not comprise any physical part or assembly of parts acting as an electric commutator. Instead, the commutation is done electronically. Thus, the electric machine comprises electronics configured for controlling the voltages and currents in the stator phase windings in a way that electric commutation may be performed. Sometimes, an EC machine or EC motor is also called a Brushless Direct Current (BLDC) machine.

The rotor of an EC machine usually comprises permanent magnets.

EC machines are driven by energizing the stator phase windings according to a predefined pattern. This pattern needs to be in synchronization with a rotor position, more precisely a rotational rotor position, of the EC machine. Otherwise, the rotor of the EC machine will not rotate in the desired manner or not rotate at all. Thus, for controlling the operation of an EC machine it is important to know the rotational rotor position or, shorter, the rotor position.

In this context, it is known to use sensors such as Hall sensors in order to detect the rotational rotor position. While such sensors can provide accurate information on a rotor position, a disadvantage is that the sensors are additional parts that introduce additional complexity and costs. Moreover, methods for determining a rotational position of a rotor of an EC machine are known which rely on the counter-electromotive force, i.e. the electromotive force (EMF) manifesting itself as a voltage that opposes the change in current which induced it. These methods are often referred to as back EMF control or back EMF methods. However, one disadvantage of these methods is that the counter-electromotive force, more precisely the resulting voltage, is only large enough to be measured, if the rotor rotates at a certain stable rotational speed or faster. Thus, back EMF control methods are not suitable for determining a rotor position while the EC motor is at a standstill or the rotor rotates slowly.

Additionally, in particular for determining a rotor position while the EC motor is at a standstill, methods are known which involve moving the rotor into a predefined position by energizing the stator phase windings accordingly. This rotational position may be called an initialization position. The advantage of such solutions is that the rotor position is precisely known. A disadvantage is that the rotor may need to rotate in order to reach the initialization position. Depending on the application of the EC motor, this can be inacceptable, e.g. if the EC motor is used for driving a tool.

Consequently, there is a need to further facilitate the determination of a rotor position for a rotor of an EC motor. The determination of the rotor position shall be suitable for determining a rotor position while the EC motor is at a standstill.

The problem is solved by a method for determining a rotor position for a rotor of an EC motor for a power tool. The EC motor comprises a plurality of stator phases. Each stator phase comprises a stator phase winding wound around associated stator teeth and forming a pair of stator poles. The method comprises:
- causing consecutive application of a voltage to at least two stator phase windings such that the applied voltage causes a current in the associated stator phase windings,
- obtaining data indicative of a gradient of the caused current for each stator phase winding,
- determining the stator phase winding associated with the smallest gradient, and
- determining the rotor position based on the determined stator phase winding associated with the smallest gradient.

This method is based on the finding that the current caused in the stator phase windings by the application of an associated voltage and in particular a gradient of this current, i.e. a change of this current over time, is influenced by the rotor position. As before, the rotor position is understood as a rotational rotor position. This is due to the fact that a rotor of an EC machine usually comprises permanent magnets. Depending on the rotational position of these permanent magnets, the current in the stator phase windings is influenced to a greater or smaller extent. More precisely, the rotor position influences an inductivity pf the stator phase windings. If a stator phase winding has a comparatively high inductivity, a gradient of a current caused by the application of a voltage is comparatively small. If a stator phase winding has a comparatively low inductivity, a gradient of a current caused by the application of a voltage is comparatively high. Even more precisely, if a voltage is applied to a stator phase winding, the stator phase winding creates a magnetic field that is oriented in the same direction or in a different direction than the magnetic field created by the permanent magnets of the rotor. The resulting current depends on the relative orientation of the magnetic field generated by the phase windings and the magnetic field of the permanent magnets with respect to one another. Consequently, by determining the stator phase winding associated with the smallest gradient of a current, the stator phase winding with the highest inductivity is determined. If the above-described voltage is applied to at least two stator phase windings, preferably all stator phase windings of the EC motor, and if the position of the permanent magnets on the rotor is known, the rotor position may be derived there from. In simplified words, by applying the above-described voltage to at least two stator phase windings, preferably all stator phase windings, the stator phase winding that is subject to the strongest influence of the permanent magnets of the rotor may be identified. Based thereon, the position of the rotor may be inferred. Altogether, the rotor position may be determined in a comparatively simple and reliable manner. This is particularly true since only one voltage with only one polarity needs to be applied to each of the stator phase windings.

The method according to the present invention is preferably applied in or on a power tool.

It is noted that for the method according to the present invention, the gradient of the current is understood as an absolute value. This means that it does not matter whether the gradient is positive or negative.

In an example, the gradient of the current may be determined as an average gradient. This means that a gradient of the current is determined more than once during the time span in which a current is generated in a respective stator phase winding following the application of a voltage to the at least two stator phase windings. Additionally or alternatively, a maximum current may be determined during the time span in which a current is generated in a respective stator phase winding following the application of a voltage to the at least two stator phase windings. In the latter case, the gradient of the current may be determined using the time span and the maximum current, wherein it is assumed that the current was zero before applying the voltage. Both alternatives allow to determine the gradient of the current in a reliable manner. The first alternative has the additional advantage that it is not necessary that the current is zero before the application of the voltage that causes the current. Thus, the application of the voltage to different stator phase windings may be done quicker.

The method according to the present invention may be applied while the EC motor is at a standstill. Moreover, the voltages that are applied to the at least two stator phase windings may be so small that they do not cause any movement, more precisely no rotation of the rotor. In particular, the voltages may be chosen such that they cause 10 % or less of a magnetic field strength that would lead to a saturation of the windings of the stator.

The EC motor for which the position of its rotor is determined, may be a three-phase motor, i.e. the stator comprises three different phase windings. In this case, the above-described method can be applied for each of the phase windings. Based thereon, the position of the rotor can be determined.

When regarded on a more general level, the method according to the present invention uses the stator phase windings for two purposes. The first purpose is to drive the rotor, i.e. to make the rotor spin. The second purpose is to detect the rotor position. Thus, when used for the second purpose, the stator phase windings may be regarded as sensors. This has the effect that sensors separate from the stator phase windings, in particular Hall sensors, are not necessary anymore. Thus, the method according to the present invention is particularly suitable for so-called "sensorless EC motors". In such motors, control only uses current information and voltage information from the motor to determine the rotor position, besides that no sensors, in particular no Hall sensors, are used.

According to an example, the rotor position is one stable detent position out of a plurality of known stable detent positions. Due to the fact that the EC motor has a rotor with permanent magnets and the stator is made from magnetizable material with locally non-uniform properties, there are a plurality of rotational positions of the rotor in which magnetic attraction forces and magnetic repulsion forces are in a local equilibrium. These positions are called detent positions or cogging positions. The cogging positions or detent positions may be designated as stable positions if, upon a small movement of the rotor away from such a position, the rotor is forced back into the detent position or cogging position. Otherwise, i.e. if upon a small movement of the rotor away from such a position, the rotor is forced even further away from this position, the detent position or cogging position may be referred to as unstable. In reality, due to the fact that the components of the EC motor are subject to manufacturing and assembly tolerances, the rotor will only assume the stable ones of the detent positions. For a given EC motor, the detent positions, in particular the stable detent positions are known. Thus, performing the method for determining a rotational position is reduced to determining in which stable detent position the rotor is. This is a further aspect that renders the determination of the rotor position simple and reliable.

According to an example, the plurality of known stable detent positions comprises rotational positions in which a web of the rotor is located adjacent to a stator tooth. More precisely, the web of the rotor is centered on a radially extending middle axis of a stator tooth. In this context, a web of the rotor is to be understood as a portion of a rotor body extending between two neighboring rotor magnets when considering a circumferential direction of the rotor.

The one stable detent position may be located adjacent to one of the stator poles of the stator phase winding associated with the smallest gradient. In other words, the rotor may be determined to be in the stable detent position that is closest to at least one of the stator poles of the stator phase winding which is associated with the smallest gradient. Consequently, the rotor position may be determined in a simple and reliable manner.

According to an embodiment, the method further comprises causing consecutive application of two opposite voltages to at least one of the at least two stator phase windings such that the applied two opposite voltages cause two opposite currents in the associated stator phase winding. It is noted that due to the fact that the gradient is only considered as an absolute value, the rotor position that is determined using the above-explained method may be ambiguous since it may not be clear whether a magnetic north pole or a magnetic south pole generates the comparatively high inductivity leading to a small gradient of the current. In other words, the rotor position determined by the above-explained method may be true for two actual rotor positions. For some applications this phenomenon may not be important such that in these applications a disambiguation is not necessary. In other applications, however, it may be important to eliminate this ambiguity. In order to do so, voltages with opposite polarity may be applied to at least one phase winding, in particular to the phase winding that is subject to the strongest influence of the permanent magnets of the rotor. Each of these voltages generates a current in the associated phase winding. Moreover, each of these voltages creates a magnetic field, wherein the two magnetic fields have opposite orientations. Depending on the orientation of the rotor, one current is larger than the other one. Based thereon, the disambiguation may be done. It is noted that the two voltages with opposite polarity may be larger than the voltages for which the current with the smallest gradient is determined.

Preferably, the step of causing consecutive application of two opposite voltages to at least one of the at least two stator phase windings such that the applied two opposite voltages cause two opposite currents in the associated stator phase winding is executed after determining the rotor position based on the determined stator phase winding associated with the smallest gradient. In this case, the consecutive application of two opposite voltages may be performed on the determined stator phase winding associated with the smallest gradient. This, the disambiguation may be done in a particularly efficient manner. Moreover, in this case, the application of the two opposite voltages will generate a magnetic field that either is oriented exactly in the same direction as the magnetic field of the rotor or is oriented exactly in an opposite direction with respect to the direction of the magnetic field of the rotor. In both cases the generated magnetic field does not result in a torque acting on the rotor. In other words, the rotor does not rotate while determining an associated rotor position including the disambiguation.

According to an example, the voltage consecutively applied to at least two stator phase windings in order to determine the rotor position based on the determination of the stator phase winding associated with the smallest gradient may cause a current of a first magnitude in the associated stator phase windings. The consecutively applied two opposite voltages which are used for the disambiguation as explained above, may cause two opposite currents of a second magnitude. The consecutively applied two opposite voltages may be chosen such that the second magnitude is at least three times the first magnitude. Preferably, the second magnitude is at least four or five times the first magnitude. Even more preferably, the second magnitude is at least nine or ten times the first magnitude. In an example, the first magnitude is 10A to 20A and the second magnitude is 200A. This allows to reliably perform the above-explained disambiguation.

Thus, in the above-described example in which the EC motor for which the position of its rotor is determined, may be a three-phase motor, a total of five voltages may be applied. First, a voltage may be applied to each of the three different phase windings. Based thereon, the rotor positions may be narrowed down to two orientations which are 180° apart from one another. Subsequently, the two voltages with opposite polarity may be applied.

The method may be executed upon starting the EC motor. As has been mentioned before, the method according to the present invention is suitable for being executed upon standstill of the EC motor. Consequently, the method according to the present invention is particularly suitable for being executed when starting the EC motor, i.e. in a situation in which a rotor position needs to be known, but in which the rotor is not spinning. Based thereon, the stator phase windings may be energized accordingly.

The method may further comprise causing acceleration of the rotor of the EC motor based on the determined rotor position. In other words, the stator phase windings may be energized based on the determined rotor position. Consequently, the rotor may spin in a desired manner.

The problem is additionally solved by a data processing apparatus comprising means for carrying out the method of the present invention. As has been mentioned before, this method is based on the finding that the current caused in the stator phase windings by the application of an associated voltage and in particular a gradient of this current, i.e. a change of this current over time, is influenced by the rotor position. The method may be executed by the data processing apparatus. In simplified words, by applying the voltage to at least two stator phase windings, preferably all stator phase windings, the stator phase winding that is subject to the strongest influence of the permanent magnets of the rotor may be identified. Based thereon, the position of the rotor may be inferred. Altogether, using such a data processing apparatus, the rotor position may be determined in a comparatively simple and reliable manner. This is particularly true since only one voltage with only one polarity needs to be applied to each of the stator phase windings.

Moreover, the problem is solved by a computer program comprising instructions which, when the program is executed by a computer, cause the computer to carry out the method of the present invention. As has been mentioned before, this method is based on the finding that the current caused in the stator phase windings by the application of an associated voltage and in particular a gradient of this current, i.e. a change of this current over time, is influenced by the rotor position. The computer program comprises instructions which cause a computer to carry out the method. In simplified words, by applying the voltage to at least two stator phase windings, preferably all stator phase windings, the stator phase winding that is subject to the strongest influence of the permanent magnets of the rotor may be identified. Based thereon, the position of the rotor may be inferred. Altogether, using such a computer program, the rotor position may be determined in a comparatively simple and reliable manner. This is particularly true since only one voltage with only one polarity needs to be applied to each of the stator phase windings.

Additionally, the problem is solved by a computer-readable storage medium comprising instructions which, when executed by a computer, cause the computer to carry out the method of the present invention. As has been mentioned before, this method is based on the finding that the current caused in the stator phase windings by the application of an associated voltage and in particular a gradient of this current, i.e. a change of this current over time, is influenced by the rotor position. The computer-readable storage medium comprises instructions which cause a computer to carry out the method. In simplified words, by applying the voltage to at least two stator phase windings, preferably all stator phase windings, the stator phase winding that is subject to the strongest influence of the permanent magnets of the rotor may be identified. Based thereon, the position of the rotor may be inferred. Altogether, using such a computer-readable storage medium, the rotor position may be determined in a comparatively simple and reliable manner. This is particularly true since only one voltage with only one polarity needs to be applied to each of the stator phase windings.

Further, the problem is solved by a motor assembly. The motor assembly comprises a sensorless EC motor and a data processing apparatus according to the invention. The data processing apparatus is coupled to the sensorless EC motor. Thus, in such a motor assembly the rotor position may be determined in a comparatively simple and reliable manner. This is particularly true since only one voltage with only one polarity needs to be applied to each of the stator phase windings.

The sensorless EC motor comprises a rotor and a stator, wherein the rotor comprises a number of permanent magnets. These permanent magnets are generally plate-shaped. This means that one dimension of a three-dimensional magnet is very small in comparison to the other dimensions. For example, this dimension is less than 20% of the smallest of the remaining dimensions. Such a magnet may have a magnet axis which may also be called a central axis or middle axis of the magnet. This axis extends perpendicularly to the two larger dimensions and in parallel to the smallest dimension. When incorporated into the rotor, each of the magnets is received in an associated pocket or slot of the rotor body or rotor core. According to an example, the rotor core may be laminated. Moreover, the rotor core comprises a central axis or axis of rotation and all magnets are arranged such that the central axis of each magnet coincides with a radial direction of the rotor core. Moreover, when considering a circumference of the rotor core, all magnets may be distributed evenly over this circumference. Optionally, the pockets or slots receiving the permanent magnets comprise air barriers, i.e. flux barriers, at their respective ends. The air barriers may be filled with adhesive in order to retain the permanent magnets within the associated pocket or slot. Alternatively, the air barriers may be simply filled with air.

Additionally, the problem is solved by a sensorless EC motor for a motor assembly of the present invention. The sensorless EC motor comprises a rotor having a number of permanent magnets distributed over a circumference of the rotor. A ratio of a circumferentially oriented width of each of the permanent magnets and a rotor diameter is at least 42%. Such a sensorless EC motor may be used in a motor assembly of the present invention, i.e. such a sensorless EC motor is suitable for a motor assembly of the present invention. However it is not mandatory for the sensorless EC motor to be used in a motor assembly of the present invention. This implies that a position of a rotor of the sensorless EC motor may be determined using the method according to the present invention. This may be done in a comparatively simple and reliable manner. This is particularly true since only one voltage with only one polarity needs to be applied to each of the stator phase windings. Moreover, due to the fact that in the sensorless EC motor the magnets are comparatively wide, it is noted that the stable detent positions or cogging positions of such a motor are not such that a rotor magnet is located radially adjacent to a stator tooth, i.e. a magnet of the rotor is not positioned centrally (in a radial direction) below a stator tooth and/or not aligned with a stator tooth. Instead, in the stable detent positions or cogging positions of such a motor a web of the rotor is positioned radially adjacent to the stator tooth, i.e. a web of the rotor is positioned centrally (in a radial direction) below a stator tooth and/or aligned with a stator tooth. As a consequence thereof, known methods for determining a rotor position will not work in connection with the sensorless EC motor.

In an example, the permanent magnets have a thickness of 2mm. Additionally or alternatively, the rotor may have an outer diameter of 27,5 mm.

It is noted that also in the sensorless EC motor according to the invention the permanent magnets of the rotor may be generally plate-shaped. This means that one dimension of a three-dimensional magnet may be very small in comparison to the other dimensions. For example, this dimension may be less than 20% of the smallest of the remaining dimensions. Such a magnet may have a magnet axis which may also be called a central axis or middle axis of the magnet. This axis may extend perpendicularly to the two larger dimensions and in parallel to the smallest dimension. When incorporated into the rotor, each of the magnets may be received in an associated pocket or slot of the rotor body or rotor core. According to an example, the rotor core may be laminated. Moreover, the rotor core comprises a central axis or axis of rotation and all magnets are arranged such that the central axis of each magnet coincides with a radial direction of the rotor core. Moreover, when considering a circumference of the rotor core, all magnets may be distributed evenly over this circumference. Optionally, the pockets or slots receiving the permanent magnets comprise air barriers, i.e. flux barriers, at their respective ends. The air barriers may be filled with adhesive in order to retain the permanent magnets within the associated pocket or slot. Alternatively, the air barriers may be simply filled with air.

According to an example, the rotor of the sensorless EC motor is generally cylindrical. In this case, the rotor has a lateral surface and two axial surfaces. Optionally, the lateral surface may comprise one or more flattened portions. This means that one or more portions of the lateral surface may be retracted with respect to a lateral surface of a perfect circular cylinder having the same diameter as the rotor. Such flattened portions render the rotor lighter in weight. Additionally, these flattened portions offer possibilities to provide markings, e.g. a barcode, a number or a data matrix code, on the lateral surface of the rotor. Such a marking can be used for production organization, logistics and/or for product traceability.

As has been mentioned before, each magnet of the rotor of the sensorless EC motor is received in a pocket. When regarding the rotor along a middle axis or its axis of rotation, the pockets may be arranged on a common circumference, i.e. when regarding the rotor along a middle axis or its axis of rotation, the pockets may be arranged on the same circular line drawn around the middle axis or axis of rotation. Along this circumference or circular line, neighboring ends of neighboring pockets are arranged at a distance from one another. This is also the case if flux barriers are used at the circumferential ends of the pockets. This means that a portion of the rotor core is provided between circumferentially neighboring ends of circumferentially neighboring pockets or circumferentially neighboring flux barriers of circumferentially neighboring pockets. These portions of the rotor core may be called webs. The circumferential width of these webs contributes to the overall mechanical stability of the rotor. Thus, for the sensorless EC motor according to the present invention, it is preferred that a circumferential width of each of the webs equals to 10 % to 15 % of a rotor diameter. In an example, the circumferential width of the web may be 3 mm. This enhances the mechanical stability while still being able to have comparatively large pockets for comparatively large magnets. The thickness or circumferential width of the web also limits a size of the magnets that can be received in the rotor's pockets.

The rotor of the sensorless EC motor of the present invention may comprise a central bore for receiving a rotor shaft. The size of this bore has an effect on both the mechanical properties of the rotor and on the magnetic properties of the rotor. It has been found that a good compromise, i.e. a good combination of mechanical and magnetic performance, may be achieved if the bore has a diameter equaling 30% to 55% of the rotor diameter. In an example, the bore has a diameter of 10 mm or 15 mm.

In case the sensorless EC motor of the present invention uses flux barriers, a portion of material of the rotor core needs to be arranged radially between each of the flux barriers and an outer circumference of the rotor, i.e. the lateral surface of the rotor core. These material portions may be called bridges. It has been found that a radial thickness of each of these bridges needs to be 0,4 mm or larger, preferably 0,5 mm or larger. This ensures a sufficient mechanical stability of the rotor. Alternatively, the radial thickness of the bridges may be expressed as a percentage of the rotor diameter. In this case, the radial thickness of the bridges needs to be 1,5% or more of the rotor diameter. This minimum radial thickness also limits a size of the magnets that can be received in the rotor's pockets.

According to an example of the sensorless EC motor, the lateral outer surface of the rotor core may comprise depressions radially outside each web and radially outside each bridge. This means that in these zones, the rotor core has depressions such that it differs from a perfectly circular cylindrical shape. These depressions may be formed such that the actual rotor core forms a protrusion radially outside each magnet. An outer surface of each of these protrusions may be rounded, e.g. circularly rounded, wherein an associated radius may be smaller than a radius of the rotor. The depressions lead to a reduced noise level during the operation of the sensorless EC motor. In this configuration, the bridges preferably end or start at a position that is radially outside a magnet. This means that the bridge and the magnet have a circumferential overlap.

In case the rotor of the sensorless EC motor comprises both protrusions and bridges, the transitions from a protrusion to a neighboring bridge shall be smooth, e.g. rounded with a rather large radius. This applies to all protrusions and all bridges. Such transitions enhance mechanical stability of the rotor core.

According to an example, the magnets of the rotor of the sensorless EC motor may be fixed inside the associated pockets using adhesive. Alternatively, the magnets may be clamped in the associated pockets. In both alternatives, the magnets are reliably held in the associated pockets.

According to an example, a ratio of a circumferentially oriented width of each of the permanent magnets and a rotor diameter is below 55% or equals 55%. According to a preferred embodiment, a ratio of a circumferentially oriented width of each of the permanent magnets and a rotor diameter is 45% to 50%. Also for such sensorless EC motors, the method of the present invention for determining a rotor position is well-suitable, such that the rotor position can be determined in a simple and reliable manner. This allows operation of the sensorless EC motor in a simple and reliable manner.

It is noted that even though the above described sensorless EC motor is suitable for a motor assembly of the present invention, the sensorless EC motor may as well be used in other applications for which it may be suitable as well.

In an example, the rotor of the sensorless EC motor comprises four or eight rotor poles. Additionally or alternatively, the stator comprises six stator teeth. It has been found that for such a sensorless EC motor is well suitable for a great variety of applications. Moreover, such a sensorless EC motor is well suitable to be used on combination with the method of the present invention to determine a rotor position.

Moreover, the problem is solved by a power tool comprising a motor assembly according to the invention. The motor assembly comprises a sensorless EC motor and a data processing apparatus according to the invention. The data processing apparatus is coupled to the sensorless EC motor. Thus, in such a motor assembly and consequently in such a power tool, the rotor position may be determined in a comparatively simple and reliable manner. This is particularly true since only one voltage with only one polarity needs to be applied to each of the stator phase windings.

According to an example of the power tool, the sensorless EC motor comprises a rotor having a number of permanent magnets distributed over a circumference of the rotor. A ratio of a circumferentially oriented width of each of the permanent magnets and a rotor diameter is at least 42%. This implies that a position of a rotor of the sensorless EC motor may be determined using the method according to the present invention. This may be done in a comparatively simple and reliable manner. This is particularly true since only one voltage with only one polarity needs to be applied to each of the stator phase windings. Moreover, due to the fact that in the sensorless EC motor the magnets are comparatively wide, it is noted that the stable detent positions or cogging positions of such a motor are not such that a rotor magnet is located radially adjacent to a stator tooth, i.e. a magnet of the rotor is not positioned centrally (in a radial direction) below a stator tooth and/or not aligned with a stator tooth. Instead, in the stable detent positions or cogging positions of such a motor a web of the rotor is positioned radially adjacent to the stator tooth, i.e. a web of the rotor is positioned centrally (in a radial direction) below a stator tooth and/or aligned with a stator tooth. As a consequence thereof, known methods for determining a rotor position will not work in connection with the sensorless EC motor of the power tool.

According to an example of the power tool, a ratio of a circumferentially oriented width of each of the permanent magnets and a rotor diameter is below 55% or equals 55%. According to a preferred embodiment, a ratio of a circumferentially oriented width of each of the permanent magnets and a rotor diameter is 45% to 50%. Also for such sensorless EC motors, the method of the present invention for determining a rotor position is well-suitable, such that the rotor position can be determined in a simple and reliable manner. This allows operation of the sensorless EC motor and the power tool comprising this sensorless EC motor in a simple and reliable manner.

It should be noted that the above examples may be combined with each other irrespective of the aspect involved.

These and other aspects of the present invention will become apparent from and elucidated with reference to the examples described hereinafter.

Examples of the invention will be described in the following with reference to the following drawings:
- Fig. 1: schematically shows a battery-powered handheld circular saw comprising a motor assembly according to the present invention with a sensorless EC motor according to the present invention and a battery pack,
- Fig. 2: schematically shows a portable electric drill comprising a motor assembly according to the present invention with a sensorless EC motor according to the present invention and a battery pack,
- Fig. 3: schematically shows a battery-powered handheld sander comprising a motor assembly according to the present invention with a sensorless EC motor according to the present invention and a battery pack,
- Fig. 4: illustrates the motor assembly in a schematic, separate view, and additionally illustrates elements of the method according to the present invention for determining a rotor position,
- Fig. 5: shows a diagram representing a detent torque over a rotational position of the sensorless EC motor of the motor assembly of Figure 4 and also for other sensorless EC motors which only differ by the relative width of the rotor magnets,
- Fig. 6: illustrates a sensorless EC motor having a relative width of 29% in a stable detent position,
- Fig. 7: illustrates another sensorless EC motor having a relative width of 36% in a stable detent position,
- Fig. 8: illustrates a sensorless EC motor having a relative width of 47% in an instable detent position,
- Fig. 9: illustrates steps of the method according to the present invention for determining a rotor position,
- Fig. 10: shows a diagram representing an inductivity of three stator phases over a rotational position of the sensorless EC motor of the motor assembly of Figure 4,
- Fig. 11: illustrates the sensorless EC motor of the motor assembly of Figure 4, in a stable detent position,
- Fig. 12: illustrates the sensorless EC motor of the motor assembly of Figure 4, in an instable detent position,
- Fig. 13: illustrates the sensorless EC motor of the motor assembly of Figure 4, in another stable detent position, and
- Fig. 14: illustrates the sensorless EC motor of the motor assembly of Figure 4, in another instable detent position.

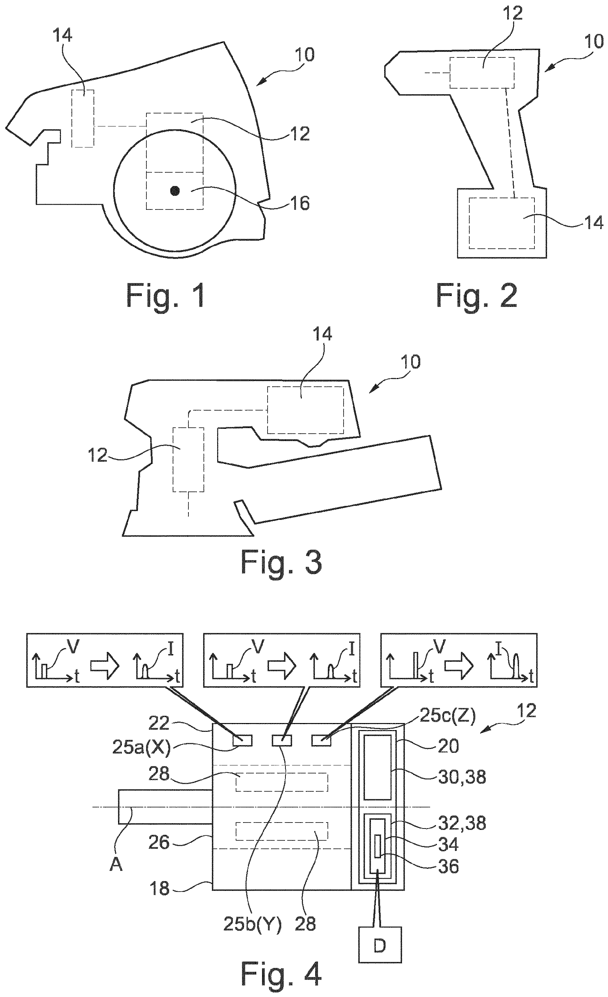

Figures 1, 2, and 3 each show a handheld, battery-powered machine tool 10. In short, such tools may be designated as power tools.

In case of figure 1, this power tool is a circular saw. In case of figure 2, this power tool is an electric drill, and in case of figure 3 this tool power is a sander.

All of these tools comprise a motor assembly 12 that is powered by a battery pack 14. In each of these examples, the motor assembly 12 and the battery pack 14 are electrically connected. The circular saw of figure 1 additionally comprises a power transmission unit 16 drivingly coupling the electric machine 12 to the saw blade. Of course, it is not excluded that also other examples of the machine tool 10 comprise a power transmission unit.

It is understood that the fact that the machine tools 10 as shown in figures 1 to 3 are battery-powered is an example only. In other examples, the machine tool 10 may be powered via an electric grid to which is may be connected using a cable. In the latter case, the machine tool 10 may comprise an inverter unit.

In each of the tools 10, the motor assembly 12 comprises a sensorless EC motor 18 and a data processing apparatus 20 which is electrically coupled to the sensorless EC motor 18 (see also Figure 4).

In terms of packaging, the data processing apparatus 20 is integrated into the sensorless EC motor 18.

The data processing apparatus 20 may also be called a control unit or a driver for the sensorless EC motor 18.

The sensorless EC motor 18 comprises a stator 22 having a total of six stator teeth 24 and a plurality of stator phases. In the present example, the EC motor 18 comprises three stator phases which are denoted X, Y, Z. Each stator phase X, Y, Z comprises a stator phase winding forming a pair of stator poles. In Figure 4, the stator phase windings 25a, 25b, 25c are represented schematically only.

Moreover, the EC motor 18 comprises a rotor 26. The rotor is rotatable about an axis A of rotation and has a diameter R.

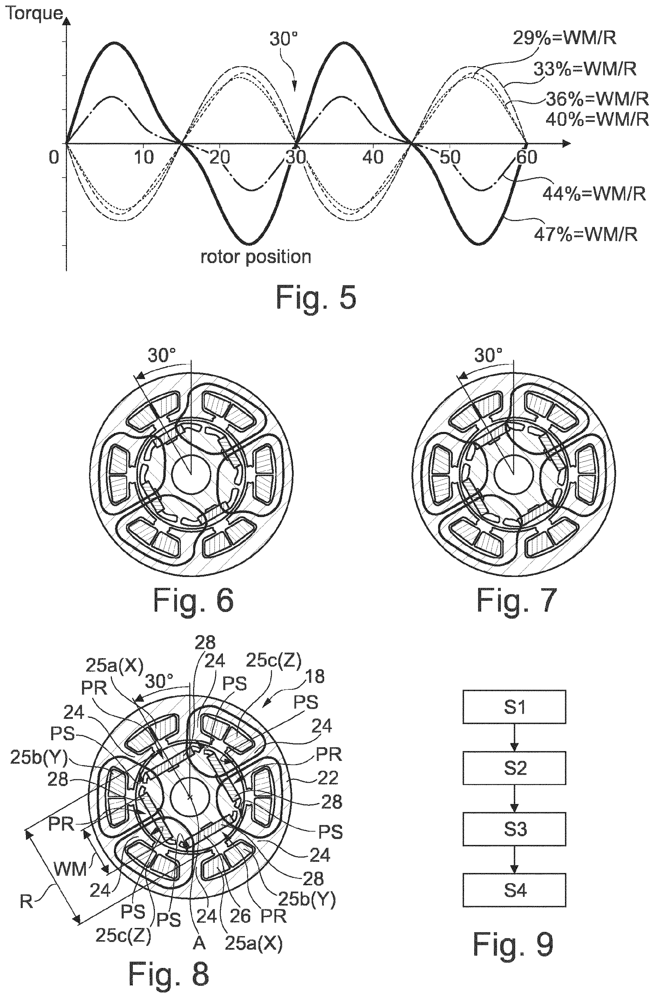

The rotor 26 comprises a total of four permanent magnets 28 distributed over a circumference of the rotor 26. These four permanent magnets 28 form a total of four rotor poles PR (cf. Figures 8 and 11 to 14).

Each of the permanent magnets 28 has a width WM which is oriented tangentially with respect to a circumference of the rotor 26.

In the example of Figure 4, a ratio of the width WM of each of the permanent magnets 28 and the rotor diameter R is 47%.

Due to this design, the rotor 26 has a total of 24 detent positions, wherein 12 of these detent positions are stable and 12 of these detent positions are instable.

The detent torque is shown in Figure 5 over a rotational segment of 60 degrees, wherein the 60 degrees refer to a mechanical rotation of the rotor 26 within the stator 22. In the detent positions, the detent torque is zero (cf. solid line and indication 47%).

For illustrative purposes, also detent torques for sensorless EC machines having a ratio of the width WM of each of the permanent magnets 28 and the rotor diameter R of 29%, 36%, 33% and 44% is also shown in the diagram of Figure 5.

It can be seen that the detent positions as such do not change when the ratio of the width WM of each of the permanent magnets 28 and the rotor diameter R changes. However, the nature of the detent position, i.e. whether the detent position is stable or instable, changes.

For a better understanding of the detent positions, Figure 6 shows a sensorless EC machine, wherein a ratio of the width WM of each of the permanent magnets 28 and the rotor diameter R is 29%. This machine is shown in a stable detent position at 30°.

As has been explained before, a stable detent position is characterized by a local equilibrium of the magnetic attraction forces and magnetic repulsion forces resulting from the fact that the EC motor 18 has a rotor 26 with permanent magnets 28 and the stator 22 is made from magnetizable material with locally non-uniform properties.

In order to represent the stable detent position also from a magnetic point of view, magnetic field lines are illustrated in a schematic manner using a bold solid line. These magnetic field lines represent the dominant magnetic flux.

Figure 7 shows a sensorless EC machine, wherein a ratio of the width WM of each of the permanent magnets 28 and the rotor diameter R is 36%. This machine is shown in a stable detent position at 30°.

Figure 8 shows the sensorless EC machine 18 of the motor assembly 12 of Figure 4, i.e. wherein a ratio of the width WM of each of the permanent magnets 28 and the rotor diameter R is 47%. The EC machine 18 is shown at the detent position at 30°. This detent position is instable.

Also in Figures 7 and 8, magnetic field lines are illustrated in a schematic manner using a bold solid line

It has to be noted that due to manufacturing tolerances and other imperfections, a real sensorless EC motor will only assume the stable detent positions, i.e. not the instable ones.

Coming back to the motor assembly of Figure 4, the data processing apparatus 20 has a data processing unit 30 and a data storage unit 32.

The data storage unit 32 comprises a computer-readable storage medium 34.

On the computer-readable storage medium 34, there is provided a computer program 36.

The computer program 36 and, thus, also the computer-readable storage medium 34 comprises instructions which, when executed by the data processing unit 30 or, more generally speaking, a computer, cause the data processing unit 30 or the computer to carry out a method for determining a rotor position for a rotor of an EC motor.

Consequently, the data processing unit 30 and the data storage unit 32 form means 38 for carrying out the method for determining a rotor position for a rotor of an EC motor.

In the present example, the method is executed upon starting the EC motor. This means that the method is executed while the rotor 26 of the EC motor 18 is not yet rotating. It is noted that it is necessary to know the rotor position in order to energize the stator phase windings 25a, 25b, 25c appropriately for making the rotor 26 rotate in the desired manner.

As has been mentioned above, the rotor 26 is in one stable detent position out of a plurality of known stable detent positions in such a situation.

In a first step S1 of the method, consecutive application of a voltage V is caused for all stator phase windings 25a, 25b, 25c. Thus, a voltage V is applied consecutively to each of the phase windings X, Y, Z. The voltage V may have a rectangular profile (cf. illustration in Figure 4 and Figure 9).

Each of these voltages V causes a current I in the associated stator phase winding X, Y, Z (cf. illustration in Figure 4).

This current I is measured such that also a gradient of each of these currents I may be determined. Alternatively, a gradient of the currents I may be measured directly.

Thus, in a second step S2 the data processing apparatus 20 obtains data D indicative of a gradient of the caused current I for each stator phase winding 25a, 25b, 25c.

Subsequently, in a third step S3, the stator phase winding 25a, 25b, 25c associated with the smallest gradient may be determined by comparing the obtained data D indicative of the gradients. The smallest gradient is understood as an absolute value.

Knowing that the rotor 26 can only be in a stable detent position, the rotor position may be determined in that the one stable detent position which is assumed by the rotor 26 needs to be located adjacent to at least one of the stator poles of the stator phase winding 25a, 25b, 25c associated with the smallest gradient. In simplified words, the rotor 26 is considered to be in the stable detent position that is the closest one to the stator phase winding 25a, 25b, 25c associated with the smallest gradient.

In this context, the relevant stator tooth forms part of the stator pole and an axial and circumferential extension of the stator pole substantially corresponds to the axial and circumferential extension of the stator tooth.

Thus, in a fourth step S4, the rotor position may be determined based on the determined stator phase winding associated with the smallest gradient and the known stable detent positions.

However, due to the fact that the gradient has been considered as absolute value, it is not known yet, whether the rotor pole that is located adjacent to the at least one of the stator poles of the stator phase winding 25a, 25b, 25c associated with the smallest gradient is a magnetic north pole or a magnetic south pole.

In other words, the rotor 26 can be in two orientations which are located 180° apart.

If it is important to know the exact rotor position without such an ambiguity, an optional method step of causing consecutive application of two opposite voltages to one of the at least two stator phase windings 25a, 25b, 25c such that the applied two opposite voltages cause two opposite currents in the associated stator phase winding may be executed.

The application of the two opposite voltages will generate a magnetic field that either is oriented exactly in the same direction as the magnetic field of the rotor 26 or is oriented exactly in an opposite direction with respect to the direction of the magnetic field of the rotor 26. In both cases the generated magnetic field does not result in a torque acting on the rotor 26. In other words, the rotor 26 does not rotate while determining an associated rotor position including the disambiguation.

Based thereon, the ambiguity may be solved.

Subsequently, acceleration or starting up of the rotor 26 of the EC motor 18 may be caused based on the determined rotor position. This is due to the fact that an appropriate energization pattern may be selected based on the determined rotor position.

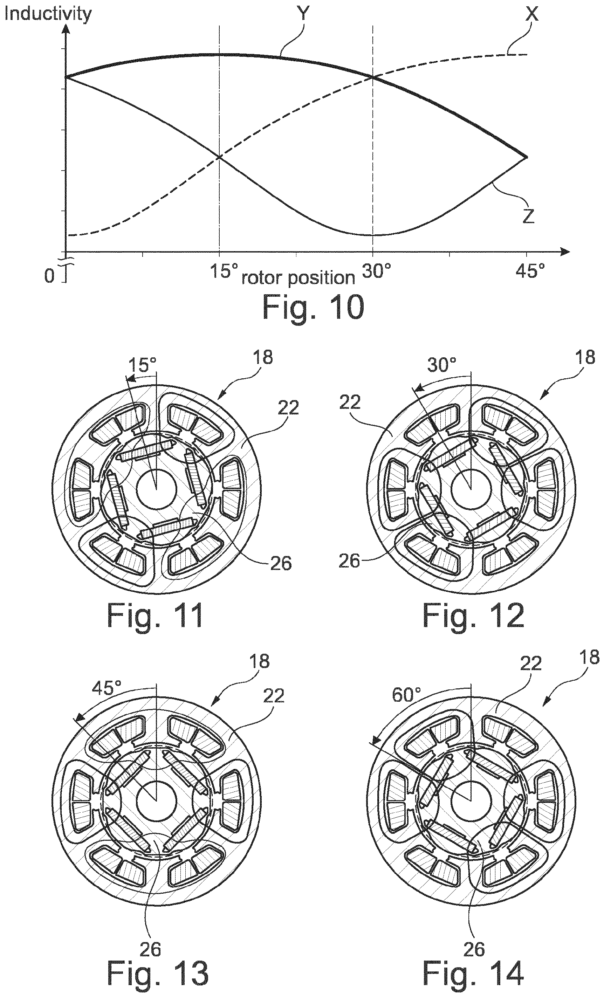

The effect underlying the present method is further illustrated in Figure 10. This Figure shows an inductivity of each of the stator phases X, Y, Z as a function of the rotor position. As has been mentioned before, a comparatively high inductivity leads to a comparatively small gradient of the current I caused by the application of the voltage V. A comparatively low inductivity leads to a comparatively large gradient of the current I caused by the application of the voltage V. Thus, following the graphs in Figure 10, the smallest gradient of the current I will be observed for phase Y if the rotor is at the position 15°. This is a stable detent position.

The position at 30° is an instable detent position that does not play a role in practical applications as discussed above. Thus, it is not relevant that the inductivities of the phases X and Y are the same in this situation.

Figures 11 to 14 illustrate the EC motor 18 in different detent positions, wherein the positions at 30° and at 60° (cf. Figures 11 and 13) are instable.

It is noted that even though the method for determining a rotor position for a rotor of an EC motor has been explained in connection with a battery-powered machine tool 10, which has been exemplified as a circular saw, an electric drill, and a sander, it is also possible to use the method for determining a rotor position for a rotor of an EC motor in connection with a battery-powered machine tool 10 which is a router, a biscuit joiner or a handheld CNC milling machine. The above explanations apply mutatis mutandis. Moreover, as has been mentioned before, the fact that the machine tool is battery-powered is optional. It is also possible that the machine tool is powered via an electric grid to which it may be connected using a cable.

It is further noted that even though the method for determining a rotor position for a rotor of an EC motor has been explained in connection with a battery-powered machine tool 10, this is not necessarily the case. This means that the method for determining a rotor position for a rotor of an EC motor may generally be used in connection with any EC motor independent of a specific application or use of the EC motor.

### List of reference signs

- 10: battery-powered machine tool
- 12: motor assembly
- 14: battery pack
- 16: power transmission unit
- 18: sensorless EC motor, EC motor
- 20: data processing apparatus
- 22: stator
- 24: stator teeth
- 25a: stator phase winding
- 25b: stator phase winding
- 25c: stator phase winding
- 26: rotor
- 28: permanent magnets
- 30: data processing unit
- 32: data storage unit
- 34: computer-readable storage medium
- 36: computer program
- 38: means for carrying out the method for determining a rotor position for a rotor of an EC motor

- A: axis of rotation
- D: data indicative of a gradient of the caused current for each stator phase winding
- U: applied voltage
- I: current resulting from the applied voltage
- WM: width of the permanent magnet
- PS: stator pole
- PR: rotor pole
- R: rotor diameter
- S1: step of the method for determining a rotor position
- S2: step of the method for determining a rotor position
- S3: step of the method for determining a rotor position
- S4: step of the method for determining a rotor position
- X: stator phase
- Y: stator phase
- Z: stator phase

## Claims

1. A method for determining a rotor position for a rotor (26) of an EC motor (18) for a power tool, wherein the EC motor (18) comprises a plurality of stator phases (X, Y, Z), each stator phase comprising a stator phase winding (25a, 25b, 25c) wound around associated stator teeth and forming a pair of stator poles (PS), the method comprising:
- causing consecutive application of a voltage (V) to at least two stator phase windings (25a, 25b, 25c) such that the applied voltage (V) causes a current (I) in the associated stator phase windings (25a, 25b, 25c),
- obtaining data (D) indicative of a gradient of the caused current (I) for each stator phase winding (25a, 25b, 25c),
- determining the stator phase winding (25a, 25b, 25c) associated with the smallest gradient, and
- determining the rotor position based on the determined stator phase winding (25a, 25b, 25c) associated with the smallest gradient.

2. The method of claim 1, wherein the rotor position is one stable detent position out of a plurality of known stable detent positions.

3. The method of claim 2, wherein the one stable detent position is located adjacent to one of the stator poles (PS) of the stator phase winding (25a, 25b, 25c) associated with the smallest gradient.

4. The method of any one of the preceding claims, further comprising:
causing consecutive application of two opposite voltages to at least one of the at least two stator phase windings (25a, 25b, 25c) such that the applied two opposite voltages cause two opposite currents in the associated stator phase winding (25a, 25b, 25c).

5. The method of any one of the preceding claims, wherein the method is executed upon starting the EC motor (18).

6. The method of any one of the preceding claims, further comprising causing acceleration of the rotor (26) of the EC motor (18) based on the determined rotor position.

7. A data processing apparatus (20) comprising means (38) for carrying out the method of any one of the preceding claims.

8. A computer program (36) comprising instructions which, when the computer program (36) is executed by a computer, cause the computer to carry out the method of claims 1 to 6.

9. A computer-readable storage medium (34) comprising instructions which, when executed by a computer, cause the computer to carry out the method of claims 1 to 6.

10. A motor assembly (12) comprising a sensorless EC motor (18) and a data processing apparatus (20) according to claim 7, wherein the data processing apparatus (20) is coupled to the sensor-less EC motor (18).

11. A sensorless EC motor (18) for a motor assembly (12) of claim 10, the sensorless EC motor (18) comprising a rotor (26) having a number of permanent magnets (28) distributed over a circumference of the rotor (26), wherein a ratio of a circumferentially oriented width (WM) of each of the permanent magnets (28) and a rotor diameter (R) is at least 42%.

12. The sensorless EC motor (18) of claim 11, wherein the rotor (26) comprises four or eight rotor poles (PR) and/or the stator (22) comprises six stator teeth (24).

13. A power tool (10) comprising a motor assembly 12 according to claim 10.

14. The power tool of claim 13, wherein the sensorless EC motor (18) comprises a rotor (26) having a number of permanent magnets (28) distributed over a circumference of the rotor (26), wherein a ratio of a circumferentially oriented width (WM) of each of the permanent magnets (28) and a rotor diameter (R) is at least 42%.
